# EUROPEAN PATENT SPECIFICATION

(11) **EP 0 377 630 B1**
(45) Date of publication and mention of the grant of the patent: **19.05.1993**
(21) Application number: 88907861.4
(22) Date of filing: 02.09.1988
(51) Int. Cl.: B65G 33/12, G01F 11/00, A01K 5/02

(54) **DEVICE FOR DOSING GRANULAR MATERIAL**
DOSIERVORRICHTUNG FÜR TEILCHENMATERIAL
DISPOSITIF DE DOSAGE DE SUBSTANCE GRANULEUSE

(30) Priority: 18.09.1987 SE 8703611
(43) Date of publication of application: 18.07.1990
(73) Proprietor: ALFA-LAVAL AGRICULTURE INTERNATIONAL AB, 147 00 Tumba (SE)
(72) Inventor: ÖMARK, Olle, S-911 00 Vännäs (SE)
(74) Representative: Simpson, Ronald Duncan Innes
(86) International application number: SE8800450
(87) International publication number: WO8902406

(56) References cited:
- EP-A- 0 006 073
- EP-A- 0 067 725
- DE-A- 3 241 239
- DE-B- 1 085 465
- DE-B- 1 148 489
- DE-B- 1 277 144
- Derwent's Abstract No. D1082 C/14, SU-676-509, 8 August 1979

## Description

The present invention relates to a device for dosing granular material comprising a circular cylindrical tube with an inlet for the supply of material and an outlet for the discharge of material doses, a feed screw, which is rotatably arranged in the tube and which extends past the inlet towards the outlet, which feed screw forms a first helical path with a constant pitch in the tube, the outer diameter of the feed screw being substantially smaller than the inner diameter of the tube, a drive motor for turning the feed screw in a direction, such that material is fed by the feed screw from the inlet towards the outlet, a helical member surrounding the feed screw, and a means for controlling the drive motor adapted to activate the drive motor in response to a desired material dose, so that the feed screw is turned a number of revolutions, which corresponds to said desired material dose.

A dosing device of this kind is commonly known (see e.g. DE-B-12 77 144) and can for instance be used for dosing granular fodder material, for instance so called pellets, when feeding animals. However, such a dosing device has a relatively poor dosing accuracy, since the granular material can be compressed non-uniformly by the feed screw during rotation of the latter. Besides, granular material can get stuck between two or more of the flanks of the feed screw during shorter or longer periods, so that the material temporarily rotates together with the feed screw without being fed forwards in the tube. The material can even get stuck along the entire feed screw and rotate together with the latter without loosening, so that the dosing device has to be taken out of operation for cleaning of the feed screw.

The object of the present invention is to provide a simple and low-priced dosing device of the kind here present, which has a good dosing accuracy, is reliable and is careful to the granular material.

This object is obtained by a device of the kind initially stated, which is characterized in that said helical member is at least one stationary elongated guide member which forms a second helical path with a direction of hand opposite to that of said first helical path, which guide member projects radially inwards from the inner wall of the tube, granular material being brought by the guide member to turn helically along said second helical path in the tube towards its outlet as an homogeneous solid body during operation, and that the end of the feed screw opposite the outlet is pivotably connected to the drive motor, so as to be free to pivot about an axis perpendicular to the axis of the screw.

An ideal state for feeding the granular material without disturbance would arise if the latter would be fed through the tube by the feed screw under constant gliding friction between the material and each of the screw and the inner wall of the tube, and with a constant friction engagement between the particles of the material, which of course is not the case in practice. During such an ideal feeding state the material would move as a homogeneous solid body in the tube along a helical path with a direction of hand opposite to the path of the feed screw. It is this insight which forms the basis for the present invention. Thus, the guide member according to the invention is adapted to control the material, so that this is fed through the tube in a way which imitates the above described ideal feeding state.

By virtue of the ability of the screw to pivot about a perpendicular axis, the feed screw will have a certain freedom of movement in radial directions so that jamming of for instance pellets between the feed screw and the tube is avoided.

The size of the pitch of the guide member depends on the kind of material to be dosed and should therefore be determined empirically. For fodder material, for instance so called pellets, the pitch of the guide member should be coarser than that of the feed screw.

Preferably, the outlet of the tube is formed by one of the ends of the tube and opens into a plane extending perpendicularly to the axis of the tube, the tube being inclined upwards from the inlet towards the outlet. Hereby, the advantage is obtained that if the tube is inclined to the ground plane, such that said plane perpendicularly to the tube forms an angle to the ground plane which substantially corresponds to the angle of repose of the material, it is avoided that the material being dosed through the outlet of the tube pulls out more or less material that still is in the tube, but the tube will therefore be completely filled to the outlet opening between the dosings. Since the outlet opening of the tube has the smallest possible opening area, the risk for forming temporarily material bridges along the opening edges of the tube is minimised.

For frequent granular fodder material, e.g. so called pellets, as inclination of the tube of about 45^{o} has proved suitable.

Advantageously, the inlet of the tube forms a channel extending downwards with such an inclination that material supplied to the channel is transported by the force of gravity down into the interior of the tube.

The axis of the feed screw is preferably spaced below the axis of the tube in at least the part of the feed screw extending past the inlet of the tube. Hereby, the risk for bridging of granular material around the feed screw at the inlet and the tube and blocking of the inlet passage is reduced, since the feed screw can efficiently feed the supplied material, which gets to the bottom of the tube in front of the inlet passage and which otherwise could initiate said bridging.

According to one embodiment of the guide member according to the invention the guide member comprises a rod, which along its entire length abuts against the inner wall of the tube. The rod has a circular cross section, but also other cross sections are conceivable, for instance oval, rectangular or triangular. Alternatively, the guide member may be formed by a projection integrated in the wall of the tube.

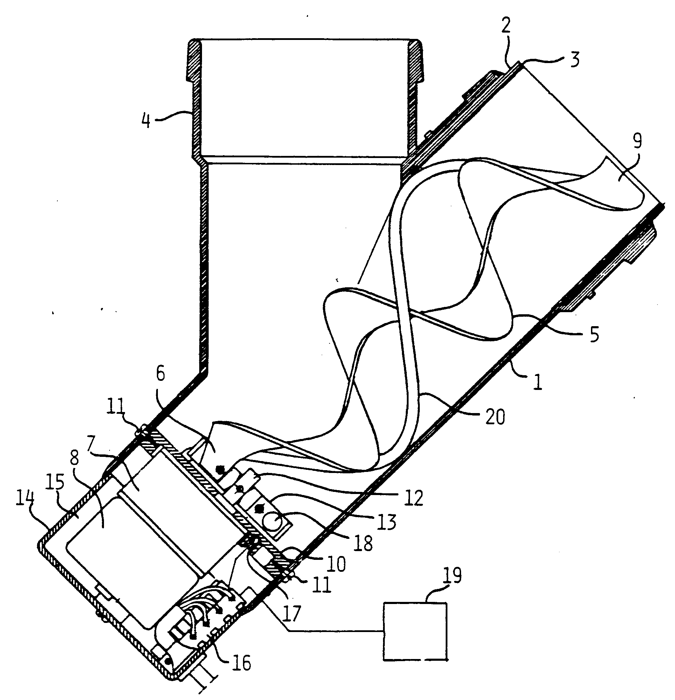

The invention will now be described in more detail with reference to the accompanying drawing, which shows a side view of a partly sectioned dosing device according to a preferred embodiment of the invention.

The dosing device shown in the drawing comprises a circular cylindrical tube 1 of plastic, which inclines 45^{o} to the horizontal. The upper end of the tube 1 forms an outlet 2 opening in a plane which extends perpendicularly to the axis of the tube, whereby the opening edge 3 of the outlet is circular. A vertical branch tube 4 is connected to the tube 1 between the ends of the latter and forms an inlet for granular material.

A feed screw 5 of a metallic material, one end 6 of which being coupled via a gear box to an electric drive motor 8 arranged at the lower end of the tube, extends in the tube 1 past the inlet 4 and has its other end 9 located in the tube close to its outlet opening. The feed screw 5 is constituted by a band, which is twisted so that if forms a shaftless screw with a constant pitch and a constant outer diameter. The axis of the feed screw is spaced below the axis of the tube in at least the part of the feed screw extending past the inlet 4 of the tube 1.

An end wall 10 is attached to the tube 1 by screws 11 close to its lower end and forms a bottom to the tube. The drive motor 8 and the gear box 7, which are coupled in a drive unit, are attached to the underside of the wall portion 10. The drive shaft 12 extends from the gear box 7 through a hole in the wall portion 10 and with an end portion a short distance into the tube from the upper side of the wall portion. At its lower end 6 the freed screw 5 is pivotably connected to the end portion of the drive shaft 12 via a flexible coupling 13 known per se so as to be free to pivot about an axis perpendicular to the axis of the screw.

A hood 14 is attached to the lower end of the tube 1 and forms together with the tube and the wall portion 10 a space 15 for the drive unit 7, 8. In the space 15, there is also a connection element 16 for connection and disconnection of the electricity supply of the motor 8 and a member 17 for recording the revolutions of the feed screw 5 during rotation of the latter. The revolution recorder 17, for instance a reed element, is acted on by a magnet 18, which is attached to the flexible clutch 13 and situated at the same radial distance in the tube 1 as the revolution recorder 17. Thus, the revolution recorder 17 is acted on each time as it is passed by the magnet 18 during rotation of the feed screw 5. A control unit 19 is connected to the electricity supply of the drive motor 8 and the revolution recorder 17 via the coupling element 16. The control unit 19 is adapted to activate the drive motor 8 in response to the desired material dose and with the aid of the revolution recorder 17, so that the feed screw 5 is turned a number of revolutions, which corresponds to said desired material dose.

A guide member 20 in the form of a rod of a metallic material with a circular cross section surrounds the feed screw and forms in the tube 1 a helical path, which has a constant pitch and which has a direction of hand opposite to the path of the feed screw. The rod 20 abuts along its entire length against the inner wall of the tube 1 and is attached to the latter. The outer diameter of the feed screw 5 is substantially smaller than the inner diameter of the tube 1, whereby the feed screw 5 has a certain radial freedom of movement in the tube 1. The pitch of the rod 20 is about twice as coarse as the pitch of the feed screw, which from practical tests has proved suitable for dosing granular fodder material, especially so called pellets. In general, the most suitable relation between the pitches of the rod 20 and the feed screw 5 depends on the kind of granular material that is to be dosed and on the friction resistance between the material and each of the tube 1, the rod 20 and the feed screw 5, and consequently said relation between pitches should always be determined empirically.

Before the dosing device is taken into operation it should be calibrated for the material to be dosed. First, the tube 1 and 4 are completely filled with granular material, whereafter the feed screw 5 by means of the drive motor 8 is rotated a given number of revolutions. With the aid of the number of revolutions and the amount of the material, which during the rotation of the feed screw 5 has been discharged through the outlet 2 of the tube, a value of the discharged material dose per revolution is calculated. Then the control unit 19 is set in accordance with this calculated value.

During operation of the dosing device the inlet tube 4 is continuously supplied with granular material, so that the tube 1 always is completely filled with material. The material in the tube 1 is fed by the feed screw 5 towards the outlet 2 of the tube, the material being guided by the rod 20 in a determined helical movement, so that the material, which is in the upper part of the tube between the inlet tube 4 and the outlet opening, is moved as a homogeneous solid body. The material which passes the outlet opening of the tube 1 falls down into for instance a collection receptacle not shown without pulling out material, which still is in the tube.

The preferred embodiment of the dosing device according to the invention shown in the drawing only comprises a single guide member. As an alternative, it would also be possible to arrange a plurality of guide members running in parallel to each other.

## Claims

1. A device for dosing granular material comprising a circular cylindrical tube (1) with an inlet (4) for the supply of material and an outlet (2) for the discharge of material doses, a feed screw (5), which is rotatably arranged in the tube (1) and which extends past the inlet (4) towards the outlet (2), which feed screw forms a first helical path with a constant pitch in the tube, the outer diameter of the feed screw (5) being substantially smaller than the inner diameter of the tube, a drive motor (8) for turning the feed screw (5) in a direction, such that material is fed by the feed screw from the inlet (4) towards the outlet (2), a helical member (20) surrounding the feed screw, and a means (19) for controlling the drive motor (8) adapted to activate the drive motor in response to a desired material dose, so that the feed screw is turned a number of revolutions, which corresponds to said desired material dose, characterised in
that said helical member is at least one stationary elongate guide member (20) which forms in the tube (1) a second helical path with a direction of hand opposite to that of said first helical path, which guide member (20) projects radially inwards from the inner wall of the tube (1), granular material being brought by the guide member to turn helically along said second helical path in the tube towards its outlet (2) as an homogeneous solid body during operation, and
that the end of the feed screw (5) opposite the outlet (2) is pivotably connected to the drive motor, so as to be free to pivot about an axis perpendicular to the axis of the screw.

2. A dosing device according to claim 1, characterised in that the pitch of the guide member (20) is coarser than the pitch of the feed screw (5).

3. A dosing device according to claim 1 or 2, **characterized in** that the outlet (2) of the tube is formed by one of the ends of the tube and opens into a plane extending perpendicularly to the axis of the tube.

4. A dosing device according to any of the claims 1-3, **characterized in** that the tube (1) inclines upwards from the inlet (4) towards the outlet (2).

5. A dosing device according to claim 4, **characterized in** that the axis of the feed screw (5) is situated spaced from and below the axis of the tube (1) at at least the part of the feed screw (5), which extends past the inlet of the tube (4).

6. A dosing device according to any of the claims 1-5, **characterized in** that the inlet (4) of the tube forms a channel extending downwards with an inclination, such that material supplied into the channel is transported by means of the force of gravity down into the interior of the tube (1).

7. A dosing device according to any of the claims 1-6, **characterized in** that the guide member (20) comprises a rod, which along its entire length abuts against the inner wall of the tube (1).

## Patentansprüche

1. Vorrichtung zum Dosieren von teilchenförmigem Material mit einem kreiszylindirschen Rohr (1) mit einem Einlaß (4) zur Zufuhr von Material und einem Auslaß (2) zur Ausgabe von Materialdosen, einer Schnecke (5), die im Rohr (1) drehbar angeordnet ist, am Einlaß (4) vorbei zum Auslaß (2) verläuft und im Rohr eine erste wendelförmige Bahn konstanter Ganghöhe bildet, wobei der Außendurchmesser der Schnecke (5) erheblich kleiner ist als der Innendurchmesser des Rohrs, mit einem Antriebsmotor (8) zum Drehen der Schnecke (5) in einer solchen Richtung, daß das Material von der Schnecke vom Einlaß (4) zum Auslaß (2) transportiert wird, mit einem die Schnecke umgebenden wendelförmigen Element (20) sowie einer Einrichtung (19) zum Steuern des Antriebsmotors (8), die diesen ansprechend auf eine Material-Solldosis so aktivieren kann, daß die Schnecke eine der Material-Solldosis entsprechende Anzahl von Umdrehungen umläuft, **dadurch gekennzeichnet,** daß das wendelförmige Element mindestens eine ortsfestes langgestrecktes Führungselement (20) ist, das im Rohr (1) eine zweite wendelförmige Bahn mit der der ersten wendelförmigen Bahn entgegengesetzter Gangrichtung bildet und von der Innenwandfläche des Rohrs (1) radial einwärts vorsteht, wobei im Betrieb Teilchenmaterial als homogene feste Masse vom Führungselement wendelförmig auf der zweiten wendelförmigen Bahn im Rohr zu dessen Auslaß (2) gebracht wird, und daß das dem Auslaß (2) entgegengesetzte Ende der Schnecke (5) schwenkbar so mit dem Antriebsmotor verbunden ist, daß es frei um eine zur Schneckenachse rechtwinklige Achse schwenken kann.

2. Dosiervorrichtung nach Anspruch 1, **dadurch gekennzeichnet,** daß die Ganghöhe des Führungselements (20) gröber als die der Schnecke (5) ist.

3. Dosiervorrichtung nach Anspruch 1 oder 2, **dadurch gekennzeichnet,** daß der Auslaß (2) des Rohrs von einem der Enden des Rohrs gebildet ist und sich in einer rechtwinklig zur Rohrachse verlaufenden Ebene öffnet.

4. Dosiervorrichtung nach einem der Ansprüche 1 bis 3, **dadurch gekennzeichnet,** daß das Rohr (1) vom Einlaß (4) zum Auslaß (2) aufwärts geneigt ist.

5. Dosiervorrichtung nach Anspruch 4, **dadurch gekennzeichnet,** daß die Achse der Schnecke (5) mindestens im am Einlaß (4) des Rohrs vorbeiverlaufenden Abschnitt der Schnecke unter der Achse des Rohrs (1) und von dieser beabstandet verläuft.

6. Dosiervorrichtung nach einem der Ansprüche 1 bis 6, **dadurch gekennzeichnet,** daß der Einlaß (4) des Rohrs einen Kanal bildet, der mit einer solchen Neigung schräg abwärts verläuft, daß dem Kanal zugeführtes Material von der Schwerkraft abwärts zum Inneren des Rohrs (1) transportiert wird.

7. Dosiervorrichtung nach einem der Ansprüche 1 bis 6, **dadurch gekennzeichnet,** daß das Führungselement (20) eine Stange aufweist, die über ihre gesamte Länge an der Innenwandfläche der Rohrs (1) anliegt.

## Revendications

1. Dispositif de dosage de substance granuleuse comprenant un tube cylindrique circulaire (1) avec une entrée (4) pour l'arrivée de la substance et une sortie (2) pour la décharge des doses de substance, une vis d'alimentation (5) qui est montée de façon rotative dans le tube (1) et qui s'étend au-delà de l'entrée (4) en direction de la sortie (2), laquelle vis d'alimentation forme un premier parcours hélicoïdal de pas constant dans le tube, le diamètre externe de la vis d'alimentation (5) étant sensiblement plus petit que le diamètre interne du tube, un moteur d'entraînement (8) pour faire tourner la vis hélicoïdale (5) dans un sens tel que la substance soit avancée par la vis hélicoïdale depuis l'entrée (4) en direction de la sortie (2), un organe hélicoïdal (20) entourant la vis d'alimentation, et un moyen (19) pour commander le moteur entraînement (8) et apte à activer ce moteur en réponse à une dose de substance désirée, de façon que la vis d'alimentation soit entraînée en rotation sur un nombre de tours qui correspond à ladite dose de substance désirée, caractérisé en ce que
ledit l'organe hélicoïdal est constitué par au moins un organe de guidage (20) stationnaire et allongé qui forme dans le tube (1) un second parcours hélicoïdal dont le pas est de sens opposé à celui du premier parcours hélicoïdal, lequel organe de guidage (20) fait saillie radialement vers l'intérieur à partir de la paroi interne du tube (1), la substance granuleuse étant amenée par l'organe de guidage à tourner de façon hélicoïdale le long du second parcours hélicoïdal dans le tube en direction de la sortie (2) sous forme d'un corps solide et homogène pendant le fonctionnement, et
en ce que l'extrémité de la vis d'alimentation (5) qui est à l'opposé de la sortie (2) est reliée de façon pivotante au moteur d'entraînement de façon à être libre de pivoter autour d'un axe perpendiculaire à l'axe de la vis.

2. Dispositif de dosage selon la revendication 1, caractérisé en ce que le pas de l'organe de guidage (20) est plus important que le pas de la vis d'alimentation (5).

3. Dispositif de dosage selon la revendication 1 ou 2, caractérisé en ce que la sortie (2) du tube est formée par l'une des extrémités du tube qui débouche dans un plan s'étendant perpendiculairement à l'axe du tube.

4. Dispositif de dosage selon l'une quelconque des revendications 1 à 3, caractérisé en ce que le tube (1) est incliné vers le haut à partir de l'entrée (4) et en direction de la sortie (2).

5. Dispositif de dosage selon la revendication 4, caractérisé en ce que l'axe de la vis d'alimentation (5) est situé au-dessous de l'axe du tube (1) dans au moins la partie de la vis d'alimentation (5) qui s'étend au-delà de l'entrée du tube (4).

6. Dispositif de dosage selon l'une quelconque des revendications 1 à 5, caractérisé en ce que l'entrée (4) du tube forme une canalisation s'étendant vers le bas, avec une inclinaison telle que la substance envoyée dans la canalisation est transportée par la force de la gravité à l'intérieur du tube (1).

7. Dispositif de dosage selon l'une quelconque des revendications 1 à 6, caractérisé en ce que l'organe de guidage (1) est constitué par une tige qui est appliquée le long de la totalité de sa longueur contre la paroi interne du tube (1).
